# EUROPÄISCHE PATENTSCHRIFT

(11) **EP 0 325 626 B1**
(45) Veröffentlichungstag und Bekanntmachung des Hinweises auf die Patenterteilung: **14.04.1993**
(21) Anmeldenummer: 88905645.3
(22) Anmeldetag: 04.07.1988
(51) Int. Cl.: B65G 1/04

(54) **LAGEREINRICHTUNG**
STORAGE DEVICE
AGENCEMENT DE STOCKAGE

(30) Priorität: 03.07.1987 CH 2531/87
(43) Veröffentlichungstag der Anmeldung: 02.08.1989
(73) Patentinhaber: Sieber, Hans, CH-9524 Zuzwil (CH)
(72) Erfinder: Sieber, Hans, CH-9524 Zuzwil (CH)
(74) Vertreter: Kulhavy, Sava, Dipl.-Ing.
(86) Internationale Anmeldenummer: CH8800118
(87) Internationale Veröffentlichungsnummer: WO8900139

(56) Entgegenhaltungen:
- DE-A- 1 901 627
- US-A- 3 528 566

## Beschreibung

Die vorliegende Erfindung betrifft eine Lagereinrichtung mit wenigstens einem Lagergestell und einem Gerät zur Bedienung des Gestells, wobei dieses Bedienungsgerät einen Tisch zur Aufnahme von Lagergut sowie eine Plattform für eine Person aufweist, welche das Lagergut von Hand ein- und auslagern kann.

In US-A-3 528 566 ist eine Lagereinrichtung dieser Gattung offenbart. Die Gestelle dieser Lagereinrichtung sind zur Aufbewahrung von Stückgut ausgeführt, wobei die Stücke von diesem Gut Abmessungen aufweisen, welche von etwa gleicher Grössenordnung sind. Bei einem solchen Stückgut kann es sich beispielsweise um Container, Pakete oder ähnlich handeln. Diese bekannte Lagereinrichtung umfasst ferner ein Bedienungsgerät für die Lagergestelle. Bei diesem Gerät bilden der Tisch zur Aufnahme von Lagergut und die Plattform für die Bedienungsperso n eine Einheit, welche entlang dem Lagergestell bewegt werden kann. Die Bedienungsperson nimmt die einzelnen Container bzw. Pakete aus dem Gestell heraus und legt sie auf den Warentisch. Vom Tisch gelangen diese dann zu einem Förderer, der sie zur Warenausgabe befördert.

Die Plattform für die Bedienungsperson umfasst einen Gehsteig für die Bedienungsperson, welcher sich an eine Seite des Warentisches anschliesst, sowie ein Geländer, welches sich an der vom Tisch abgewandten Seite bzw. Kante des Gehsteiges befindet und welches praktisch vertikal angeordnet ist. Dieses Geländer ist aus sicherheitstechnischen Gründen beim hochfahrbaren Bedienungsgerät unerlässlich. Das Bedienungsgerät dient bei dieser vorbekannten Lagereinrichtung auch zum Einbringen der Ware in die Lagergestelle. Für die Aufnahme der einzulagernden Ware schliesst sich ein Palettenboden an die Plattform für die Bedienungsperson an. Der Palettenboden umfasst eine Grundplatte, welche in derselben Ebene liegt wie der Gehsteig und welche sich an jene Kante des Gehsteigkörpers anschliesst, die mit dem Geländer versehen ist. Im Palettenboden sind Förderer eingebaut, welche die Versetzung der jeweiligen mit Ware beladenen Palette in das Lagergestell bewirkt.

Eine solche Lagereinrichtung ist für die Aufnahme und Handhabung von Langgut nicht konstruiert und daher auch nicht verwendbar, dies unter anderem auch deswegen, weil das Langgut sich in Kassetten und nicht auf Paletten befindet. Bei Langgut kann man nicht einzelne Stücke aus dem Gestell direkt herausnehmen, sondern man muss zunächst die ganze Kassette aus dem Gestell herausziehen und die einzelnen Stücke von Gut erst dieser entnehmen. Die Höhe der einzelnen Lagerfächer ist bei der vorbekannten Einrichtung an die angenommene Höhe der Container angepasst. Eine solche Höhe der Lagerfächer ist für Langgut zu gross, weil Langgut in nur dünnen Schichten gelagert wird. Die Höhe der Fächer in Langgutlagern ist somit in der Regel klein. Unter solchen Umständen kann der Höhenunterschied zwischen der Oberfläche des Materialtisches und dem Gehsteigkörper der Höhe von zwei bis drei Fächern im Lagergestell entsprechen. Dies bedeutet, dass die zwei bis drei im Lagergestell zuunterst liegenden Schichten von Kassetten sich gar nicht auf die Oberseite des Tisches bringen lassen. Folglich sind diese Kassettenschichten mit Hilfe des vorbekannten Gerätes gar nicht bedienbar.

Die Aufgabe der vorliegenden Erfindung ist, eine Lagereinrichtung anzugeben, bei der auch die untersten Schichten von Fächern in einem Lagergestell mit Hilfe des Bedienungsgerätes bedient werden können.

Diese Aufgabe wird bei der Einrichtung der eingangs genannten Gattung erfindungsgemäss so gelöst, wie dies im kennzeichnenden Teil des Anspruchs 1 definiert ist.

Nachstehend werden Ausführungsbeispiele der vorliegenden Erfindung anhand der bei liegenden Zeichnungen näher erläutert. Es zeigt:
Fig. 1 in einer Draufsicht eine Lagereinrichtung mit zwei Reihen von Lagergestellen und einem entlang diesen Gestellen bewegbaren Bedienungsgerät,
Fig. 2 in einer Seitenansicht eine der Reihen der Lagergestelle sowie das Bedienungsgerät gemäss Fig. 1,
Fig. 3 in einer Seitenansicht das genannte Bedienungsgerät,

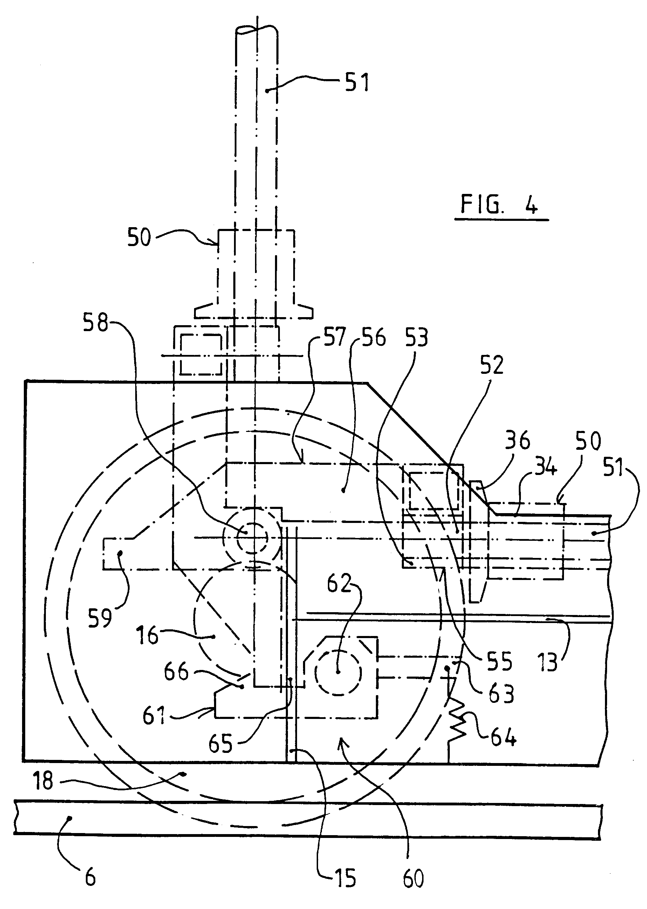

Fig. 4 ein Detail des Bedienungsgerätes nach Fig. 3,
Fig. 5 einen Ausschnitt aus der Anfangspartie einer der Kassetten, in welchen das Lagergut untergebracht sein kann,
Fig. 6 in einer Draufsicht den Kassettenabschnitt nach Fig. 5 und
Fig. 7 in einer Frontansicht zwei Kassetten, die im Lagergestell übereinander versogt sind.

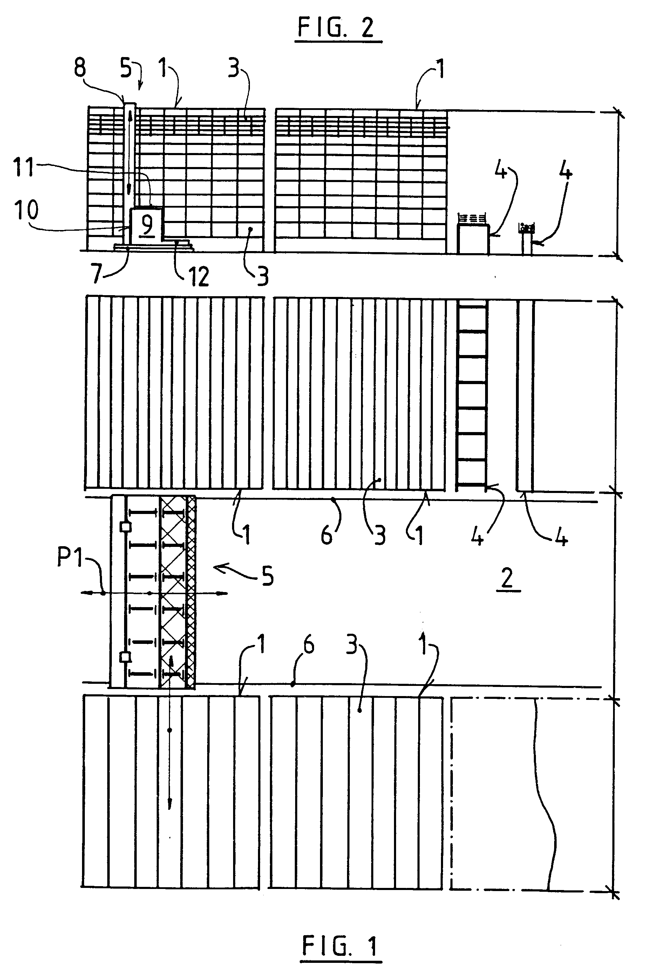

Die vorliegende Lagereinrichtung weist zwei Reihen von Lagergestellen 1 auf, zwischen welchen sich ein Gang 2 befindet. In diesem Gang 2 ist ein Bedienungsgerät 5 in Richtung des Pfeiles P1 entlang den Gestellreihen hin und her bewegbar. Das Bedienungsgerät 5 bewegt sich auf Schienen 6 entlang den Lagergestellen 1. Das Lagergut kann in Richtung des Pfeiles P2 vom Bedienungsgerät 5 in das Fach 3 eingelagert oder aus dem Fach 3 in das Bedienungsgerät 5 ausgelagert werden. Die Ein- und Auslagerung von Lagergut erfolgt manuell durch eine diese Einrichtung bedienende Person. Die Fächer 3 der Gestelle 1 können unterschiedliche Breiten aufweisen, wie dies aus Fig. 1 ebenfalls ersichtlich ist. Hinter der in Fig. 1 oben dargestellten Gestellreihe befinden sich Tische 4, auf welchen die ausgelagerten Materialstücke zu Kommissionen zusammengestellt werden. Die Kommissionen werden dann gebündelt und zum Abtransport bereitgehalten.

In Fig. 2 ist jene Reihe der Lagergestelle 1 in einer Seitenansicht dargestellt, hinter welcher sich die Kommissioniertische 4 befinden. Das jeweilige Lagergestell 1 kann breitere und schmälere Fächer 3 zugleich aufweisen. In Fig. 2 ist das Bedienungsgerät 5 schematisch dargestellt. Dieses weist Fahrwerke 7 auf, von welchen je eines sich in einem der Endbereiche des Bedinungsgerätes 5 befindet. Diese Fahrwerke 7 bewegen sich auf den genannten Schienen 6 im Gang 2. Zwischen den Fahrwerken 7 erstreckt sich ein Rahmen 8, dessen Hauptebene vertikal verläuft. Entlang diesem Rahmen 8 kann sich der Hubteil 10 des Bedienungsgerätes 5 in vertikaler Richtung bewegen. Der Hubteil 10 weist einen Grundkörper 9 auf. Im oberen Bereich dieses Grundkörpers 9 befindet sich ein Tisch 11 zur Aufnahme von Lagergut. Seitlich am Grundkörper 9 ist eine Plattform 12 für die das Lager bedienende Person angebracht. Während des Betriebes der vorliegenden Lagereinrichtung bewegt sich die Plattform 12 zusammen mit dem Materialtisch 11 entlang den Lagergestellen 1, und zwar sowohl in horizontaler als auch in vertikaler Richtung.

In Fig. 2 ist der Hubteil 10 des Bedienungsgerätes 5 in seiner unteren Stellung dargestellt. Aus dieser Figur ist unter anderem auch ersichtlich, dass der Grundkörper 9 des Hubteiles 10 die zwei zuunterst liegenden Schichten der Lagerfächer 3 verdeckt, wobei, wie bereits gesagt worden ist, sich der Tisch 11 auf der Oberseite des Grundkörpers 9 befindet. Folglich können die Fächer 3 dieser zwei zuunterst liegenden Fächerschichten mit Hilfe des Materialtisches 11 nicht bedient werden. Der Grundkörper 9 des Hubteiles 10 kann nicht flach ausgeführt sein. Denn die Breite des Ganges 2, d.h. der Abstand zwischen den zwei Reihen von Lagergestellen 1, beträgt meistens 6 m. Bei diesem Abstand der Gestellreihen 1 würde ein flacher Grundkörper 9 des Hubteiles 10 kaum die bei dieser Länge desselben erforderliche Steifigkeit aufweisen können.

Damit auch die sich unter dem Niveau des Materialtisches 11 befindlichen Fächer 3 mit Hilfe dieses Gerätes 5 bedient werden können, ist die Plattform 12 für die Bedienungsperson derart ausgebildet, dass sie zur Aufnahme von Lagergut ebenfalls geeignet ist. Die Plattform 12 kann zur Zwischenlagerung von Lagergut beispielsweise dann ausgenützt werden, wenn die unteren Fächer 3 der Gestelle 1 mit Hilfe dieses Gerätes 5 bedient werden sollen. Bei der Bedienung dieser unteren Fächer 3 verlässt die Bedienungsperson die Plattform 12 und sie steht bzw. bewegt sich auf dem Lagerboden neben dem Bedienungsgerät 5, wie dies in Fig. 2 angedeutet ist. Die Bedienungsperson kann mit Hilfe geeigneter Mittel den Hubteil 10 des Bedienungsgerätes 5 so steuern, dass die Plattform 12 jenem Fach 3 des Gestelles 1 gegenübergestellt wird, in das oder aus dem das Gut ein- bzw. ausgelagert werden soll. Die Handhabung von Lagergut erfolgt dabei, wie gesagt, manuell. Falls Fächer 3 oberhalb der Reichweite der sich auf dem Lagerboden befindlichen Bedienungsperson bedient werden sollen, so liegen diese schon oberhalb des Niveaus des Materialtisches 11, wenn sich das Bedienungsgerät 10 in seiner unteren Stellung befindet. Dann besteigt die Bedienungsperson die Plattform 12 wieder und sie bewegt sich auf dieser Plattform bis zum betreffenden Fach 3. Diesem Fach 3 wird der Tisch 11 gegenübergestellt, um das Lagergut handhaben zu können.

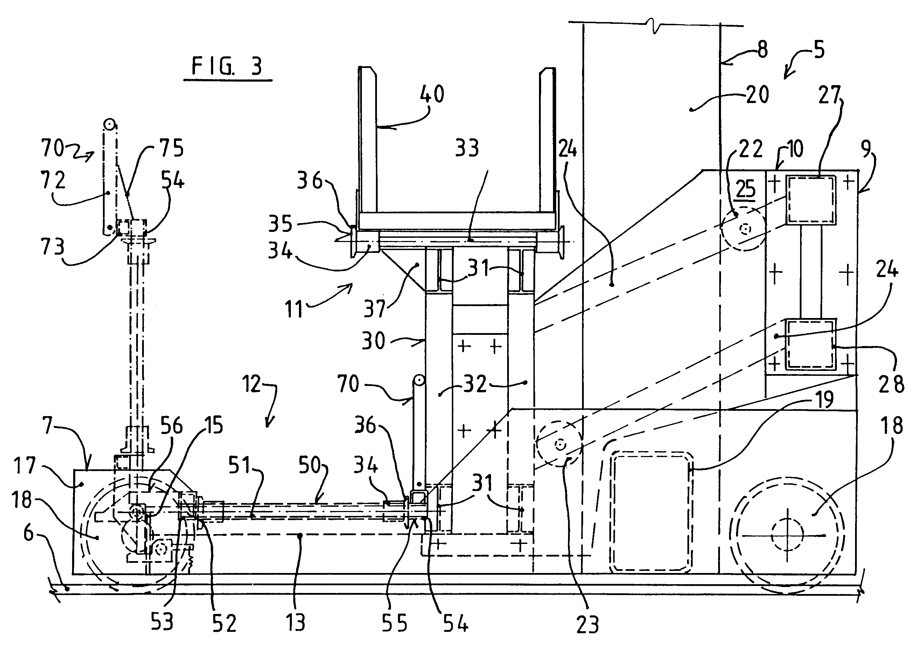

Aus Fig. 3 sind weitere Einzelheiten des Bedienungsgerätes 5 ersichtlich. In Fig. 3 ist das Bedienungsgerät 5 in einer Seitenansicht dargestellt. Das in dieser Zeichnung dargestellte Laufwerk 7 weist einen praktisch viereckigen Rahmen 17 auf, der aus vertikal angeordneten Platten besteht. In diesem Fahrwerkrahmen 17 sind Laufräder 18 gelagert, welche auf den Schienen 6 abrollen können. Der bereits erwähnte Vertikalrahmen 8 besteht aus vier kastenförmigen Schenkeln. Von diesen Rahmenschenkeln ist in Fig. 3 der untere horizontale Schenkel 19 dargestellt, der an die Innenseite der innenliegenden Platte des Fahrwerkrahmens 17, beispielsweise durch Schweissen, angeschlossen ist. Das andere Ende dieses Rahmenschenkels 19 ist an die innenliegende Seitenplatte des Rahmens 17 des gegenüberliegenden und der anderen Schiene 6 zugeordneten Fahrwerks 7 angeschlossen. Im Fahrwerk 7 ist der vertikale Schenkel 20 des Rahmens 8 befestigt. Im gegenüberliegenden Fahrwerk ist ein zweiter vertikaler Rahmenschenkel 20 befestigt, wobei die oberen und in Fig. 3 nicht dargestellten Enden dieser Rahmenschenkel 20 mit Hilfe eines zweiten horizontalen Rahmenschenkels 19 miteinander verbunden sind.

Der Grundkörper 9 des Hubteiles 10 weist Führungsabschnitte 25 auf, von welchen je einer einem der vertikal verlaufenden Rahmenschenkel 20 zugeordnet ist und sich an der Aussenseite des Grundkörpers 9 befindet. Der jeweilige Führungsabschnitt 25 umfasst eine Platte, die sich in der vorgesehenen Bewegungsrichtung des Bedienungsgerätes 5 und zu den beiden Seiten des jeweiligen Rahmenschenkels 20 erstreckt. An der einen Seite des Rahmens 8 schliesst sich die hier liegende Endpartie der Führungsplatte 25 an den Grundkörper 9 an. Die an der anderen Seite des Vertikalrahmens 8 liegenden Endpartien der Führungsplatten 25 sind mit Hilfe von übereinander liegenden Verbinder 27 und 28 miteinander verbunden. Diese Verbinder 27 und 28 sind stirnseitig an die jeweilige Führungsplatten 25 angeschlossen. Die Verbinder 27 und 28 erstrecken sich somit ebenfalls über die ganze Breite des Ganges 2, d.h. von einem Fahrwerk 7 bis zum anderen Fahrwerk.

Zwischen dem ersten, oberen Verbinder 27 und dem Vertikalschenkel 20 des Rahmens 8 ist eine erste Rolle 22 in der Führungsplatte 25 einerends gelagert, welche auf der einen Seitenwand des Vertikalschenkels 20 abrollen kann. An der anderen Seite dieses Vertikalschenkels 20 ist eine zweite Rolle 23 in der Führungsplatte 25 einerends gelagert, die sich zwischen diesem Rahmenschenkel 20 und dem Grundkörper 9 befindet. Die Höhe dieser zweiten Rolle 23 ist so gewählt, dass sie unterhalb des unteren Verbinders 28 liegt. Die anderen Enden der Rollen 22 und 23 sind in Lagerplatten 24 gelagert, welche sich von den Verbindern 27 und 28 bis zum Grundkörper 9 erstrecken und sich in einem Abstand von der jeweiligen Führungsplatte 25 befinden. Es ist eine Hubvorrichtung (nicht dargestellt) einer bekannten Art vorgesehen, welche an den Führungsplatten 25 angreift und welche die vertikal gerichtete Bewegung des Hubteiles 10 ermöglicht. Diese Hubvorrichtung kann beispielsweise Hubzylinder enthalten, welche über Seile in an sich bekannter Weise an den Hubteil 10 angeschlossen sind. Es ist auch eine Antriebsvorrichtung einer bekannten Art vorgesehen, welche die Bewegung des Bedienungsgerätes 5 entlang den Schienen 6 ermöglicht.

Der Tisch 11 umfasst Paare von horizontal verlaufenden Längsträgern 31 und von vertikal verlaufenden Querträgern 32. Diese Träger 31 und 32 sind untereinander fest verbunden, so dass sie ein stabiles Gestell 30 des Tisches 11 bilden. Die horizontalen Längsträger 31 erstrecken sich über die ganze Breite des Ganges 2 von einem Fahrwerk 7 bis zum anderen. Die vertikalen Querträger 32 sind an die Führungsplatten 25, beispielsweise mit Hilfe von Schrauben, angeschlossen, wobei dieses Tischgestell 30 einen der Bestandteile des Grundkörpers 9 darstellt.

Auf dem oberen Paar von Längsträgern 31 befindet sich eine Rollenbahn 35, die zur Aufnahme einer Materialkassette 40 ausgebildet ist. Diese Rollenbahn 35 enthält Wellen 33, die in Abständen voneinander auf den oberen Längsträgern 31 befestigt sind. An den Enden der Wellen 33 ist jeweils eine Rolle 34 gelagert, deren Aussenseite mit einem Führungskranz 36 versehen ist. Der Abstand zwischen den Führungskränzen 36 der auf derselben Welle 33 sitzenden Führungsrollen 34 ist so gewählt, dass er der Breite der Palette bzw. Kassette 40 entspricht. Die Kassetten 40 können zwecks Ein- bzw. Auslagerung von Material aus dem Fach 3 auf die Rollenbahn 35 herausgezogen werden.

Damit der Abstand zwischen dem Tischgestell 30 und dem vertikal verlaufenden Führungsrahmen 8 möglichst klein ist, sind die Wellen 33 in bezug auf die Mitte des Tischgestelles 30 und vom Führungsrahmen 8 weg in ihrer Längsrichtung seitlich versetzt. Die sich dabei ergebende einseitige Belastung der hervorstehenden Endpartie der Wellen 33 wird durch Konsolen 37 abgefangen. Diese sind an einem der oberen Länsgträger 31 befestigt und der vorspringende Abschnitt der Welle 33 liegt auf der Oberseite dieser Konsole 37 auf.

Im unteren Bereich des Tischgestelles 30, und zwar an der vom Führungsrahmen 8 abgewandten Seite desselben, schliesst sich die Plattform 12 für die Bedienungsperson an den Grundkörper 9, bzw. an das Tischgestell 30 an. Der Boden 13 dieser Plattform 12 ist einerseits mit der Unterseite des unteren Paares der Längsträger 31 und andererseits mit einem Plattformträger 15 verbunden. Dieser Plattformträger 15 befindet sich im Bereich des in Fig. 3 links dargestellten Laufrades 18, das auf einer Welle 16 sitzt. Der Plattformträger 15 erstreckt sich ebenfalls über die ganze Länge des Bedienungsgerätes 5, d.h. zwischen den beiden Laufwerken 7 des Bedienungsgerätes 5. Der Boden 13 der Plattform 12 kann beispielsweise aus Riffelblech sein. Der Höhenunterschied zwischen dem Plattformboden 13 und der die Tischoberseite darstellenden Rollenbahn 35 ist so gewählt, dass diese Tischoberfläche 35 sich für die auf dem Plattformboden 13 stehende Person in einer optimalen ergonomischen Höhe befindet.

Die Plattform 12 ist ferner so ausgebildet, dass sie das Lagergut, bzw. die Kassette 40 für das Lagergut, ebenfalls aufnehmen kann. Zu diesem Zweck ist eine an der Plattform 12 schwenkbar angebrachte Rollenbahn 50 vorgesehen. Diese zusätzliche Rollenbahn 50 weist, gleich wie die Rollenbahn 35 des Tisches 11, Wellen 51 auf, auf den sich die Rollen 34 mit Kränzen 36 an der Aussenseite derselben zur Führung der Kassetten 40 befinden. Die Wellen 51 sind bei dieser zusätzlichen Rollenbahn 50 allerdings länger ausgeführt als die Wellen 33 bei der Rollenbahn 35 des Tisches 11, so dass von der Aussenseite der Rollen 34 kurze Wellenabschnitte 52 abstehen. Diese Wellenabschnitte 52 sind in den Längsseiten 53 und 54 eines Rahmens 55 gelagert. Diese Längsseiten 53 und 54 des Rollenbahnrahmens 55 erstrecken sich entlang der ganzen Plattform 12. Die Kurzseiten dieses Rahmens 55 verbinden die vorderen und hinteren Enden der Längsseiten 53 und 54 zusammen. Diese Kurzseiten sind zwecks Vereinfachung der Zeichnungen hier nicht dargestellt. Wenn die Längsseiten 53 und 54 mit den Wellenenden 52 fest verbunden sind, dann können die genannten Kurzseiten des Rollenbahnrahmens 55 wegfallen.

Die erste der genannten Längsseiten 53 des Rollenbahnrahmens 55 ist mit einem der Arme 56 wenigstens eines zweiarmigen Hebels 57 fest verbunden. Dieser bzw. diese Hebel 57 sind um eine horizontal verlaufende Achse 58 schwenkbar, welche entweder am Plattformträger 15 oder in der Seitenwand des Fahrwerkrahmens 17 gelagert ist. Um diese Achse 58, welche sich im vom Tisch 11 abgewandten Bereich der Plattform 12 befindet, kann die zusätzliche Rollenbahn 50 praktisch in einem Bereich von etwa 90 Grad geschwenkt werden. Diese Rollenbahn 50 kann eine horizontale Lage einnehmen, in der sie sich parallel zum Boden 13 der Plattform 12 befindet. In dieser Lage kann die zusätzliche Rollenbahn 50 zur Aufnahme von Kassetten 40 ausgenützt werden. Die Bedienungsperson steht dabei neben der Plattform 12 auf dem Lagerboden. Die Rollenbahn 50 muss sich in einem bestimmten Abstand vom Boden 13 der Plattform 12 befinden, damit die Rollen 34 drehen können, wenn die Pallette 40 auf diesen bewegt wird.

Die Bedienungsperson führt den Hubteil 10 des Bedienungsgerätes 5 derart, dass die zusätzliche Rollenbahn 50 jenem der unteren Fächer 3 gegenübersteht, mit dem ein Austausch von Material erfolgen soll. Dann wird eine Kassette 40 auf die zusätzliche Rollenbahn 50 ausgezogen und das Lagergut kann dieser entweder entnommen oder in diese eingefüllt werden.

Andererseits kann die Rollenbahn 50 eine vertikale Lage einnehmen, wie dies in Fig. 3 strichpunktiert angedeutet ist. Die zusätzliche Rollenbahn 50 wird in diese vertikale Lage dann gebracht, wenn Fächer 3 bedient werden sollen, die sich ausserhalb der Reichweite der auf dem Boden des Lagers stehenden Bedienungsperson befinden. In diesem Fall muss die Bedienungsperson die Plattform 12 besteigen und die Rollenbahn 50 darf sie an ihrer Arbeit nicht hindern.

Wenn die Rollenbahn 50 sich in ihrer vertikalen Lage befindet, dann dient sie als ein Geländer der Plattform 12. Damit die Rollenbahn 50 in ihrer vertikalen Lage während einer gewünschten Zeitspanne bleibt, ist eine Arretiervorrichtung 60 für diese Rollenbahn 50 vorgesehen. Diese Arretiervorrichtung 60 weist eine Klinke 61 auf, welche um eine Achse 62 kippbar ist. Zu der einen Seite dieser Achse 62 steht ein Arm 63 der Klinke 61 von dieser Achse 62 ab. Am freien Ende dieses Armes wirkt eine Zugfeder 64 ein, die andernends am Fahrwerkrahmen 17 angeschlossen ist. Zu der anderen Seite der Achse 62 weist die Klinke 61 einen vertikal verlaufenden Einschnitt 65 auf, so dass jener Bereich der Klinke 61, welcher von der Achse 62 abgewandt ist, eine Nase 62 mit vertikal gerichteten Anschlagfläche bildet. Die Endpartie des zweiten Armes des Hebels 57 weist einen Vorsprung 59 mit parallel zueinander verlaufenden Seitenwänden auf, dessen Dicke kleiner ist als die Breite des Einschnittes 65 in der Klinke 61. Der Abstand der Klinke 61 von der Welle 58 des Hebels 57 ist so bemessen, dass der Vorsprung 59 am Hebel 57 im Einschnitt 65 Platz finden kann, wenn die zusätzliche Rollenbahn 50 in ihre vertikale Lage gebracht wird. Die Zugfeder 64 bringt die Klinke 61 zum Formschluss mit dem Vorsprung 59 am Hebel 57. Wenn man die Rollenbahn 50 in ihre horizontale Lage bringen will, dann drückt man die Nase 66 der Klinke 61 abwärts, wodurch der Vorsprung 59 am Rollenbahnhebel 57 frei wird und die Rollenbahn 50 ist frei beweglich.

Die Kassetten 40 sind nicht besonders breit und die Bedienungsperson benötigt während ihrer Arbeit auf der Plattform 12 auch nicht besonders viel Platz. Folglich ist die Breite der Plattform bzw. des Gehsteigs 12 normalerweise verhältnismässig klein. Eine weitere Folge von diesen Tatsachen ist, dass die zusätzliche Rollenbahn 50, die bis zum Gehsteigboden 13 heruntergeklappt werden kann, ebenfalls nicht sehr breit ist. Eine solche Rollenbahn 50 ergibt, wenn sie sich in ihrer vertikalen Stellung befindet, ein Geländer, dessen Höhe den Vorschriften für die Unfallverhütung nocht nicht genügt. Deswegen ist ein zusätzliches Geländer 70 an der dem Tisch 11 näher liegenden Längsseite 54 des Rollenbahnrahmens 55 schwenkbar angebracht.

Dieses Geländer 70 weist eine horizontal verlaufende Stange 71 auf, die sich entlang dem Gehsteig 12 erstreckt, und zwar entweder unuterbrochen oder mit Unterbruch. Diese Geländerstange 71 ist an den ersten Enden von Distanzstangen 72 befestigt, welche sich zwischen der Geländerstange 71 und dem Rollenbahnrahmen 55 erstrecken. Die diesem Rahmen 55 zugewandten Enden der Distanzstangen 72 sind an einer Hilfsschiene 73 angelenkt, und zwar derart, dass das Hilfsgeländer 70 in einem Bereich von etwa 90 Grad geschwenkt werden kann. Die Hilfsschiene 73 ist auf der Längsseite 54 des Rollenbahnrahmens 55 befestigt. Die Begrenzung des Schwenkbereiches des Geländers 70 ist so gewählt, dass das Geländer 70 zur Hilfsrollenbahn 50 praktisch rechtwinklig steht, wenn diese auf dem Gehsteig 12 des Hubteiles 10 heruntergelassen ist. Das Geländer 70 verläuft dagegen praktisch vertikal, wenn sich die zusätzliche Rollenbahn 50 ebenfalls in ihrer vertikalen Stellung befindet. Damit das Geländer 70 in seiner vertikalen Lage bleibt und nicht in seine rechtwinklige Stellung zu der Rollenbahn 50 übergeht, ist eine Arretiervorrichtung 75 für das Geländer 70 verwendet. In ihrer einfachsten Form kann diese Arretiervorrichtung 75 als eine Kette ausgeführt sein, die einerends beispielsweise am Geländer 70 selbst befestigt ist. Das andere Ende dieser Kette 75 kann in einer bekannten Weise an der Rollenbahn 50 befestigtbar sein.

Die Voraussetzung dafür, dass sich die Kassetten 40 auf den Hubteil 10 und von diesem in die Fächer 3 von Hand überführen lassen, ist, dass sie sich auf den Rollenbahnen, die übrigens auch in den Fächern 3 vorhanden sind, leicht bewegen lassen. Dann besteht allerdings die Gefahr, dass die Kassetten 40 unter Umständen aus dem Fach 3 sogar selbständig ausfahren könnten. Um diese Gefahr auszuschliessen, ist die jeweilige Kassette 40 mit einem Rastmechanismus 80 versehen.

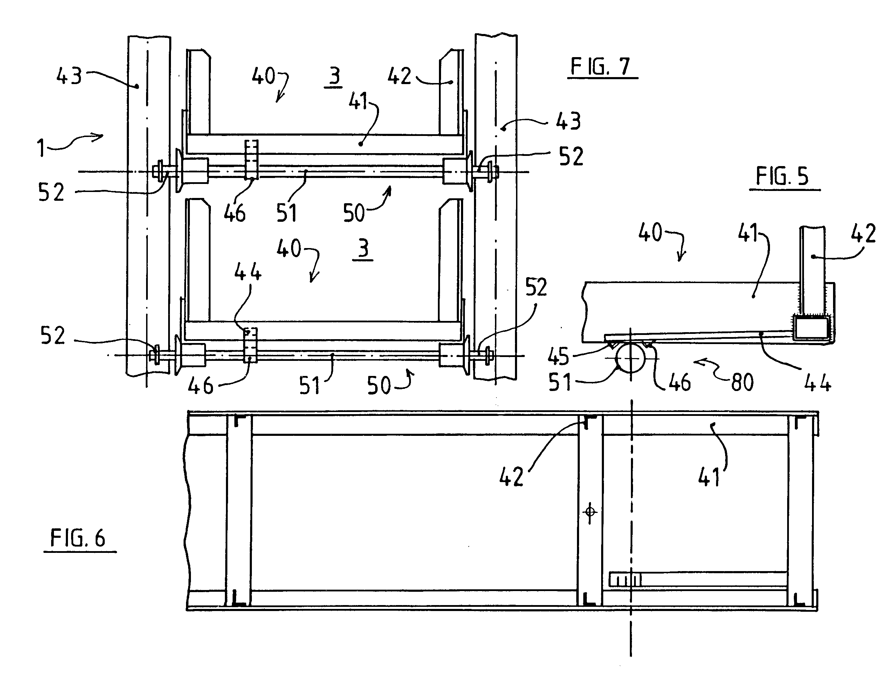

In Fig. 5 ist einer der Endabschnitte einer Kassette 40 in einer Seitenansicht dargestellt. Fig. 6 zeigt einen längeren Abschnitt der Kassette 40 in Draufsicht, wobei dieser Abschnitt den Endabschnitt gemäss Fig. 5 mitumfasst. Fig. 7 zeigt zwei übereinander angeordnete Kassetten 40 in einer Frontansicht, die sich in Fächern 3 eines der Lagergestelle 1 befinden. Die Kassetten 40 weisen einen Boden 41 auf, der aus Winkelstücken besteht. Diese bilden einen horizontalen, liegenden Rahmen, an den sich vertikal verlaufende Seitenstücke 42 anschliessen. Das Gestell 1 weist Stehteile 43 und horizontale Träger (nicht dargestellt) auf, in welchen die äusseren Enden 52 der Wellen 51 eingelassen sind. Auf diesen Wellen 51 sind die Führungsrollen 34 für die Kassetten 40 gelagert.

Eine der genannten Wellen 51 ist in Fig. 5 ebenfalls dargestellt. An der Unterseite der Kassette 40 ist ein federnder Arm 44 einerends befestigt. Am anderen Ende dieses Armes 44 sind zwei sich in einem Abstand voneinander befindliche Vorsprünge 45 und 46 ausgebildet, die vom Arm 44 abwärts abstehen. Die Flanken dieser Vorsprünge 45 und 46 sind in der Längsrichtung des Armes 44 schräg geformt. Der Abstand zwischen diesen Vorsprüngen 45 und 46 entspricht etwa dem Durchmesser der Welle 51.

Wenn die Kassette 40 in eines der Fächer 3 hinein bewegt wird, dann gelangt das freie Ende des Armes 44 zur nächsten Welle 51. Die Höhe dieses Armendes ist so bemessen, dass die Welle 51 mit der schrägen Flanke des nächstliegenden Vorsprunges 45 bzw. 46 in Berührung kommt. Bei weiterer Bewegung der Kassette 40 gleitet dieser Vorsprung auf der Oberseite der Welle 51, bis sein Scheitel den Scheitel der Welle 51 passierte. Nun befindet sich die Welle 51 zwischen den zwei Vorsprüngen 45 und 46 und die Kassette 40 kann sich nicht mehr von selbst frei bewegen. Die Kraft, mit welcher die Vorsprünge 45 und 46 gegen die Welle 51 angedrückt werden, lässt sich durch die Länge, Breite und das Material des Armes 44 ohne weiteres einstellen.

## Patentansprüche

1. Lagereinrichtung mit wenigstens einem Lagergestell (1) und einem Gerät (5) zur Bedienung des Gestells, wobei dieses Bedienungsgerät einen Tisch (11) zur Aufnahme von Lagergut sowie eine Plattform (12) für eine Person aufweist, welche das Lagergut von Hand ein- und auslagern kann, dadurch gekennzeichnet, dass der Gehsteig (13) auf der Plattform (12) für die Bedienungsperson zugleich zur Aufnahme von Lagergut ausgebildet ist.

2. Lagereinrichtung nach Anspruch 1, dadurch gekennzeichnet, dass die Plattform (12) mit einer Rollenbahn (50) ausgerüstet ist, welche sich im Bereich des Gehsteiges (13) befindet und zur Aufnahme von Kassetten (40) geeignet ist, in welchen das Lagergut untergebracht ist, und dass diese Rollenbahn (50) derart ausgeführt ist, dass sie auch als Geländer der Plattform (12) verwendbar ist.

3. Lagereinrichtung nach Anspruch 2, dadurch gekennzeichnet, dass die Rollenbahn (50) einen länglichen Rahmen (55) aufweist, welcher sich entlang der Plattform (12) erstreckt, dass in diesem Rahmen (55) Rollen (34) gelagert sind, dass eine der Längsseiten (54) der Rollenbahn (50) dem Tisch (11) zugewandt sein kann und dass die andere Längsseite (53) der Rollenbahn (50) an der gegenüberliegenden Längsseite (15) des Gehsteigkörpers (13) schwenkbar gelagert ist.

4. Lagereinrichtung nach Anspruch 3, dadurch gekennzeichnet, dass an der an der Plattform (12) angelenkten Längsseite (53) der Rollenbahn (50) ein erster Arm (56) wenigstens eines zweiarmigen Hebels (57) befestigt ist, dass durch diesen Hebel (57) eine Welle (58) hindurchgeht, die als Schwenkachse für die Rollenbahn (50) dient, und dass am Rahmen (7) des Bedienungsgerätes (5) wenigstens eine Rastklinke (61) angebracht ist, welche mit dem Ende (59) des zweiten Armes des Hebels (57) in Eingriff gelangen kann, wenn die Rollenbahn (50) sich in ihrer vertikalen Lage befindet.

5. Lagereinrichtung nach Anspruch 1, dadurch gekennzeichnet, dass die zur Aufnahme von Lagergut vorgesehenen Teile (11,13) der Einrichtung Rollensätze (35) zur Aufnahme von Lagergutkassetten (40) aufweisen, dass die Rollen (34) des jeweiligen Rollensatzes mit einem Kranz (36) zur Führung der Kassetten (40) versehen sind, dass die Rollen (34) paarweise auf einer gemeinsamen Welle (33 bzw. 51) sitzen und dass die Kränze (36) sich an der Aussenseite der auf der gemeinsamen Welle gelagerten Rollen befinden.

6. Lagereinrichtung nach Anspruch 5, dadurch gekennzeichnet, dass an der Unterseite der Kassette (40) sich ein Arm (44) befindet, der einerends an der Kassette befestigt ist, dass das andere Ende dieses Armes mit Vorsprüngen (45,46) versehen ist, deren Seitenwände in der Längsrichtung des Armes (44) schräg verlaufen, und dass der Abstand zwischen solchen Vorsprüngen mit dem Durchmesser der Rollenwelle (33 bzw. 51) vergleichbar ist.

7. Lagereinrichtung nach Anspruch 1, dadurch gekennzeichnet, dass das Bedienungsgerät (5) einen Rahmen (8) aufweist, dessen Hauptebene vertikal verläuft, dass entlang diesem Rahmen (8) ein Hubteil (10) des Bedienungsgerätes (5) in vertikaler Richtung bewegbar ist, dass dieser Hubteil (10) einen Grundkörper (9) aufweist, welcher an der einen Seite des Vertikalrahmens (8) angeordnet ist, dass der Hubteil (10) ferner den Tisch (11) umfasst, welcher sich etwa auf der Höhe des oberen Bereiches des Grundkörpers (9) befindet und welcher an der anderen Seite des Vertikalrahmens (8) angeordnet ist, und dass der Hubteil (10) auch die Plattform (12) umfasst, welche an jener Seite des Tisches (11) angeordnet ist, welche vom Vertikalrahmen (8) abgewandt ist.

8. Lagereinrichtung nach Anspruch 7, dadurch gekennzeichnet, dass der Vertikalrahmen (8) vertikale Schenkel (20) umfasst, dass der Grundkörper (9) des Hubteiles (10) Führungsabschnitte (25) aufweist, von welchen je einer einem der vertikal verlaufenden Rahmenschenkel (20) zugeordnet ist, dass der jeweilige Führungsabschnitt (25) zumindest eine Platte (24) umfasst, die sich in der vorgesehenen Bewegungsrichtung des Bedienungsgerätes (5) erstreckt, dass an der einen Seite des Rahmens (8) sich die hier liegende Endpartie der Führungsplatte (24) an einen der Verbinder (27 bzw. 28) des Grundkörpers (9) anschliesst, dass die an der anderen Seite des Vertikalrahmens (8) liegende Endpartie der Führungsplatte (24) an den Tisch (11) angeschlossen ist und dass die Platten (24) mit Rollen (22,23) versehen sind, welche das Gleiten des Hubteiles (10) entlang dem Vertikalrahmen (8) erlauben.

9. Lagereinrichtung nach Anspruch 1, dadurch gekennzeichnet, dass der Tisch (11) horizontal verlaufende Längsträger (31) und vertikal verlaufende Querträger (32) umfasst, welche ein Gestell (30) des Tisches (11) bilden, dass auf dem oberen Paar der Längsträger (31) sich die Rollenbahn (35) des Tisches (11) befindet, die zur Aufnahme einer Materialkassette (40) ausgebildet ist, und dass die Wellen (33) der Rollenbahn (35) in bezug auf die Mitte des Tischgestelles (30) vom Vertikalrahmen (8) weg in ihrer Längsrichtung seitlich versetzt sind.

## Claims

1. A storage device having at least one storage rack (1) and a device (5) for operating these racks, whereby said operating device (5) comprises a table (11) for receiving the objects to be stored and a platform (12) for the operator, who can by hand store up the objects to be stored and remove them from the storage racks, wherein the foot-plate (13) of this platform (12) is carried out in such a way that it can also be used by the operator for mounting objects to be stored.

2. A storage device according to claim 1, wherein the platform (12) comprises a roller conveyer (50) which is placed in the area of the foot-plate (13) and which is convenient for the mounting of boxes (40) in which the objects to be stored are placed, and wherein said roller conveyer (50) is carried out in such a way that it can also be used as a railing on the platform (12).

3. A storage device according to claim 2, wherein the roller conveyor (50) contains a longitudinal framework (55) which extends along the platform (12), in said framework (55) rollers (34) are placed, one of the longitudinal sides (54) of the roller conveyor (50) can be looking towards the table (11) and wherein the other longitudinal side (53) of the roller conveyor (50) is sluable mounted on the opposite length side (15) of the foot-plate (13).

4. A storage device according to claim 3, wherein on that one longitudinal side (53) of the roller conveyor (50) which is pivoted on the platform (12) a first arm (56) of an at least two-armed lever (57) is attached, a shaft (58) passes through said lever (57), this shaft serves as a swivel axis for the roller conveyor (50), and wherein on the frame (7) of the operating device (5) at least one notch arm (61) is attached which can notch with the end part (59) of the second arm of the lever (57) when the roller conveyor (50) is situated in its vertical position.

5. A storage device according to claim 1, wherein those parts (11,13) of the device which serve for mounting of the objects to be stored have sets of rollers (35) which take up the boxes (40) containing objects to be stored, the rollers (34) of the respective set have a crown rim (36) for transporting the boxes (40), the rollers (34) are placed in pairs on a common shaft (33 resp. 51) and wherein the crown rims (36) are placed on the outer side of the rollers which rest on the common shaft.

6. A storage device according to claim 5, wherein on the bottom part of the box (40) there is an arm (44) one end of which is attached to the box, the other end of said arm has projections (45,46), the side walls of said projections take a slanting course in the longitudinal direction of the arm, and wherein the distance between such projections is comparable with the diameter of the roller-shaft (33 resp. 51).

7. A storage device according to claim 1, wherein the operating device (5) has a frame (8), the principal surface of said frame stands vertically, along said frame (8) a lifting section (10) of the operating device (5) is moveable in a vertical direction, said lifting section (10) has a main body (9) which is attached to one side of the vertical frame (8), the lifting section (10) further has a table (11) which is situated about in the height of the upper part of the main body (9) and which is arranged on the other side of the vertical frame (8), and wherein the lifting section (10) also has a platform (12) which is arranged on that one side of the table (11) which is turned away from the vertical frame (8).

8. A storage device according to claim 7, wherein the vertical frame (8) has vertical limbs (20), the main body (9) of the lifting section (10) shows guiding sections (25), each one of them is assigned to one of the vertical frame limbs (20), the respective guiding section (25) has at least one plate (24) which extends in the intended guide motion of the operating device (5), on one side of the frame (8) one end part of the guiding plate (24) is secured to one of the binders (27 resp. 28) of the main body (9), one end part of the guiding plate (24) which is placed on the other side of the vertical frame (8) is connected to the table (11) and wherein the plates (24) have rollers (22,23) which permit a gliding of the lifting section (10) along the vertical frame (8).

9. A storage device according to claim 1, wherein the table (11) encompasses horizontal balks (31) and traverse vertical supporters (32) which form a shelf (30) of the table (11), on the upper pair of said balks (31) the roller conveyer (35) of the table (11) is placed which is meant to take up a box (40) containing objects to be stored, and wherein the shafts (33) of the roller conveyor (35) in relation to the middle of the table shelf (30) are shifted sideways away from the vertical frame (8) in its longitudinal direction.

## Revendications

1. Dispositif de stockage comportant au moins un casier de stockage (1) et un appareil (5) permettant de servir et desservir le casier, cet appareil comporte une table (11) où accueillir les marchandises à stocker ainsi qu'une plate-forme (12) pour une personne qui pourra ainsi charger ou décharger à mains nues les marchandises stockées, caractérisé comme suit : le trottoir (13) de la plate-forme (12) sert à la personne chargée de la manutention ainsi qu'à l'accueil des marchandises.

2. Dispositif de stockage selon revendication 1, caratérisé comme suit: la plate-forme (12) est équipée d'un transparteur à galets (50) qui se trouve dans la sphère du trottoir (13) et est adapté à l'accueil de caissons dans lesquels sont casées les marchandises, le transporteur à roulettes (50) est conçu de manière à pouvoir également servir de garde fou de la plate-forme(12).

3. Dispositif de stockage selon revendication 2, caractérisé comme suit: le transporteur à galets (50) comporte un châssis oblong (55), qui s'étend le long de la plate-forme (12), l'un des côtés longs (54) du transporteur à galets (50) peut être tourné vers la table (11) et l'autre côté long (53) du transporteur à galets (50) est pivotant et adossé au côté long opposé (15) du trottoir.

4. Dispositif de stockage selon revendication 3, caractérisé comme suit: au côté long (53) du transporteur à galets (50) articulé à la plate-forme (12) est fixé le premier bras (56) au moins d'un levier (57) à deux bras, ce levier (57) actionne un arbre (58) qui sert d'axe de pivotement pour le transporteur à galets (50), le châssis (7) de l'appareil (5) est équipé d'au moins un cliquet d'arrêt (61) qui peut s'engrener avec l'extrémité (59) du deuxième bras du levier (57), si le transporteur (50) se trouve en position verticale.

5. Dispositif de stockage selon revendication 1, caractérisé comme suit: les parties du dispositif (11,13) prévues pour le stockage des marchandises comportent des jeux de roulettes (35) destinés à l'accueil des caissons dès marchandises (40), les roulettes (34) de chaque jeu de roulettes sont équipées d'une couronne (36) pour guider les caissons (40), les roulettes (34) sont rattachées par paires à un arbre commun (33 ou 51), et les couronnes (36) se trouvent du côté extérieur des roulettes rattachées à un arbre commun.

6. Dispositif de stockage selon revendication 5, caractérisé comme suit: du côté inférieur du caisson (40) se trouve un bras (44) dont une extrémité est fixée au caisson, l'autre extrémité de ce bras est équipée de saillies (45, 46) dont les parois latérales courent de biais sur la longueur du bras (44), l'écartement entre ces saillies correspond au diamètre de l'arbre à roulettes (33 ou 51).

7. Dispositif de stockage selon revendication 1, caractérisé comme suit: l'appareil de manoeuvre (5) comporte un châssis dont la surface principale est verticale, le long de ce châssis (8) l'élément mobile (10) de l'appareil de manoeuvre (5) est actionnable verticalement, cet élément mobile (10) comporte un élément de base (9) disposé d'un des côtés du châssis vertical (8), l'élément mobile (10) comporte en outre la table (11) qui se trouve à la hauteur de la partie supérieure de l'élément de base (9) et qui est disposée de l'autre côté du châssis vertical (8) et l'élément mobile (10) comporte aussi la plate-forme (12) qui est disposée du côté de la table (11) opposé au châssis vertical (8).

8. Dispositif de stockage selon revendication 7, caractérisé comme suit: le châssis vertical (8) comporte un angle de côté vertical (20), l'élément de base (9) de l'élément mobile (10) comporte des sections de guidage (25) dont chacune est attribuée à l'un des côtés d'angle des parties verticales du châssis (20), chaque section de guidage (25) comporte au moins une plaque (24) qui se trouve dans le sens du mouvement prévu pour l'appareil de manoeuvre (5), sur l'un des côtés du châssis (8) l'extrémité de la plaque de guidage (24) se rattache à l'un des raccords (27 ou 28) de l'élément de base (9), l'extrémité de la plaque de guidage (24) qui se trouve de l'autre côté du châssis vertical (8) se rattache à la table (11), les plaques (24) sont équipées de roulettes (22, 23) qui permettent à l'élément mobile (10) de glisser le long du châssis vertical (8).

9. Dispositif de stockage selon revendication 1, caractérisé comme suit: la table (11) comporte des longerons (31) se déplaçant horizontalement et des traverses se déplaçant verticalement (32) qui forment le cadre (30) de la table (11), le transporteur à galets (35) de la table (11) se trouve sur la paire supérieure de longerons (31) et est conçu pour accueillir un caisson de matériel (40), les arbres (33) du transporteur à galets (35) par rapport aù centre du cadre de la table (30) se déplacent à partir du châssis vertical (8) latéralement sur toute leur longueur.
